# EUROPEAN PATENT APPLICATION

(11) **EP 3 865 270 A1**
(43) Date of publication of application: **18.08.2021**
(21) Application number: 21156469.5
(22) Date of filing: 11.02.2021
(51) Int. Cl.: B28B 1/14, B28B 19/00, B28B 23/00, B32B 7/12, B32B 9/04, E04C 2/52, E04F 15/02, B32B 3/14, B32B 13/04, E04B 1/66

(54) **A METHOD OF MAKING A WATERPROOF SLAB ELEMENT AND A WATERPROOF SLAB ELEMENT**

(30) Priority: 13.02.2020 FI 20205147
(71) Applicant: Lehto Group OYJ, 90440 Kempele (FI)
(72) Inventor: LIMMA, Jouni, 92930 Pyhäntä (FI); LEHTONEN, Hannu, 86300 Oulainen (FI); TOLONEN, Markku, 90440 Kempele (FI)
(74) Representative: Berggren Oy

(57) **Abstract**

The method for manufacturing a waterproof slab element (24) comprises preparing a casting mold (10) for the casting of the slab element, the casting mold having a mold surface (12) that forms the shape of the top surface (30) of the slab element, installing a water-impermeable first piece of waterproofing membrane (16) and at least one water-impermeable second piece of waterproofing membrane (17) on the mold surface so that the second piece of waterproofing membrane partially overlaps the first piece of waterproofing. The method comprises preparing a concrete mix comprised of aggregate and a cementitious binder, pouring the prepared concrete mix into the casting mold, allowing the concrete mix to harden in the casting mold to form a slab element, and removing the slab element from the casting mold. In the method, a part of the second piece of waterproofing membrane is rested on top of the first piece of waterproofing, detached from the first piece of waterproofing membrane.

## Description

A method of making a waterproof slab element, which method comprises preparing a casting mold for casting a slab element, which casting mold has a mold surface forming the shape of the top surface of the slab element, installing a water-impermeable first piece of waterproofing membrane and at least one water-impermeable second piece of waterproofing membrane on the mold surface so that the second piece of waterproofing membrane partially overlaps the first piece of waterproofing membrane, preparing a concrete mix comprised of aggregate and a cementitious binder, pouring the prepared concrete mix into the casting mold, allowing the concrete mix to harden in the casting mold to form a slab element, and removing the slab element from the casting mold. The invention also relates to a waterproof slab element.

Wet room floors are usually made of concrete, and ceramic tiles are often used as the flooring. The joints of ceramic tiles are not waterproof, which is why waterproofing must be provided on the surface of the floor slab before attaching the ceramic tiles. Waterproofing can be provided using liquid brush-on waterproofing agents, which, when dried, form a waterproof elastic film on the surface of the floor slab. Waterproofing can also be made of waterproofing membrane, which is glued to the surface of the floor slab using a liquid waterproofing agent.

Floor slabs can be manufactured at a prefabrication plant as slab elements to be installed on site as such or as components of a modular unit that is installed as a whole in the building to be constructed. At the prefabrication plant, the slab elements are cast "upside down" in the molds, i.e. the mold surface of the bottom of the mold produces the shape of the top surface of the slab element. When the concrete has hardened sufficiently, it is removed from the casting mold and waterproofing is formed on the top surface of the slab element. Before forming the waterproofing, the concrete in the slab element must dry to less than 90% humidity. Due to the drying of the slab element, the slab elements must be stored in dry and warm conditions for about four weeks so that their moisture content decreases to a level that allows the installation of waterproofing. The time required for the slab element to dry multiplies the throughput time of the slab element at the prefabrication plant, which increases the total cost of manufacturing the elements. If the slab element is installed as part of a modular unit, the long drying time of the slab elements slows down the production chain of the modular units. The prefabrication plant must be provided with sufficient dry and warm storage space for the drying slab elements, which further increases the manufacturing costs.

WO 2018/160002 discloses a method for attaching a waterproofing membrane to the surface of a concrete element. The method comprises attaching a waterproofing membrane to the bottom of a casting mold, pouring fresh concrete into the casting mold, allowing the concrete to harden into a concrete element, and removing the concrete element from the casting mold. The waterproofing membrane adheres to the surface of the concrete element by means of a binder in the concrete. In the publication, the waterproofing membrane may consist of pieces which are joined together by a watertight weld. Making a weld joint requires that the waterproofing membrane be a material that can be welded, which places limitations on the waterproofing membrane to be used. Weld joints must be made carefully before pouring the concrete, which slows down the production of the concrete element. Weld joints can also easily tear if the joint is subjected to local tension as the waterproofing membrane adapts to the contours of the uneven mold surface.

An object of the invention is to provide a method for manufacturing a waterproof slab element and a waterproof slab element, which can reduce the disadvantages associated with the prior art. The objects of the invention are achieved by a method and slab element characterized by what is set out in the independent claims. Some preferred embodiments of the invention are set out in the dependent claims.

The invention relates to a method for making a waterproof slab element, which method comprises preparing a casting mold for casting a slab element, which casting mold has a mold surface forming the shape of the top surface of the slab element, installing a water-impermeable first piece of waterproofing membrane and at least one water-impermeable second piece of waterproofing membrane on the mold surface so that the second piece of waterproofing membrane partially overlaps the first piece of waterproofing membrane. The method comprises preparing a concrete mix comprised of aggregate and a cementitious binder, pouring the prepared concrete mix into the casting mold, allowing the concrete mix to harden in the casting mold to form a slab element, and removing the slab element from the casting mold. In the method, a part of the second piece of waterproofing membrane is placed on top of the first piece of waterproofing separately from the first piece of waterproofing membrane. Thus, the first and second pieces of waterproofing membrane overlap and the overlapping portions of the pieces of waterproofing membrane are not attached to each other. If necessary, the overlapping portions of the pieces of waterproofing membrane can slide relative to each other when the concrete mix fills the casting mold, whereby the pieces of waterproofing membrane press firmly against the mold surface over the entire area of the mold surface. Due to the possibility of movement of the overlapping portions, the pieces of waterproofing membrane are not subjected to tensile strain during casting, which could cause the pieces of waterproofing membrane to tear.

In a preferred embodiment of the method according to the invention, the concrete mix is poured into a casting mold so that the concrete mix flows from the top of the second piece of waterproofing membrane onto the first piece of waterproofing membrane. The concrete mix thus flows over the joint of the pieces of waterproofing membrane from the direction of the uppermost piece of waterproofing, which prevents the concrete mix from penetrating between the pieces of waterproofing membrane.

In another preferred embodiment of the method according to the invention, the pieces of waterproofing membrane are attached to the mold surface with a sticky tape or glue.

In another preferred embodiment of the method according to the invention, before pouring the concrete mix into the casting mold, a floor drain is installed on the piece(s) of waterproofing membrane so that the mouth of the floor drain is placed firmly against the surface of the piece of waterproofing membrane.

In another preferred embodiment of the method according to the invention, before pouring the concrete mix into the casting mold, reinforcement, sewer pipes and/or possible wiring are installed on the piece(s) of waterproofing membrane.

In another preferred embodiment of the method according to the invention, the method comprises using a casting mold with the edges of the mold surface being in a different plane than the central part of the mold surface. Thus, the mold surface of the casting mold is not in the same plane throughout.

In another preferred embodiment of the method according to the invention, after removal from the casting mold, the overlapping portions of the pieces of waterproofing adhering to the top surface of the slab element are glued together with a curable liquid containing an adhesive. Preferably, the overlapping portions of the pieces of waterproofing are glued together with a liquid waterproofing agent.

In another preferred embodiment of the method according to the invention, after removal from the casting mold, a membrane-like drain flange is attached, at the floor drain, on the piece of waterproofing membrane adhering to the top surface of the slab element. Preferably, the drain flange is attached to the piece of waterproofing membrane with a curable liquid containing an adhesive, such as a liquid waterproofing agent. Alternatively or in addition, the drain flange may have an adhesive surface by means of which it is attached to the piece of waterproofing membrane.

The waterproof slab element, which is the object of the invention, is formed of a hardened concrete mix containing aggregate and a cementitious binder and has a top surface, the top surface having a water-impermeable first piece of waterproofing membrane and at least one water-impermeable second piece of waterproofing membrane so that the second piece of waterproofing membrane partially overlaps the first piece of waterproofing. The first piece of waterproofing membrane and the at least one second piece of waterproofing membrane are attached to the top surface of the floor slab with the cementitious binder of the hardened concrete mix contained in the slab element. The first piece of waterproofing membrane and the second piece of waterproofing membrane are attached to each other at their overlapping surfaces by a curable liquid containing an adhesive. Preferably, the first piece of waterproofing membrane and the second piece of waterproofing membrane are attached to each other at their overlapping surfaces by a liquid waterproofing agent.

In a preferred embodiment of the slab element according to the invention, the pieces of waterproofing membrane are of non-weldable material.

An advantage of the invention is that it shortens the total time of manufacturing the waterproof slab element at the prefabrication plant, and thus lowers the slab manufacturing costs.

Another advantage of the invention is that it reduces the materials required for the manufacture of the waterproofing, resulting in savings in material costs.

A further advantage of the invention is that complete separate work steps are eliminated from the manufacture of the slab element, which results in savings in labor costs.

The invention is described in detail below. In the description, reference is made to the accompanying drawings in which

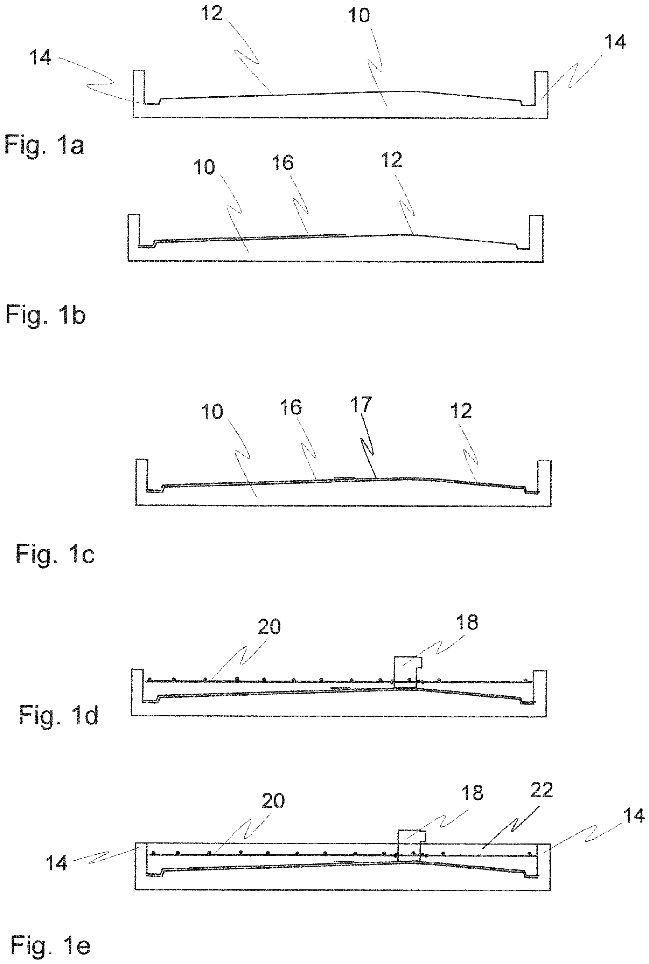

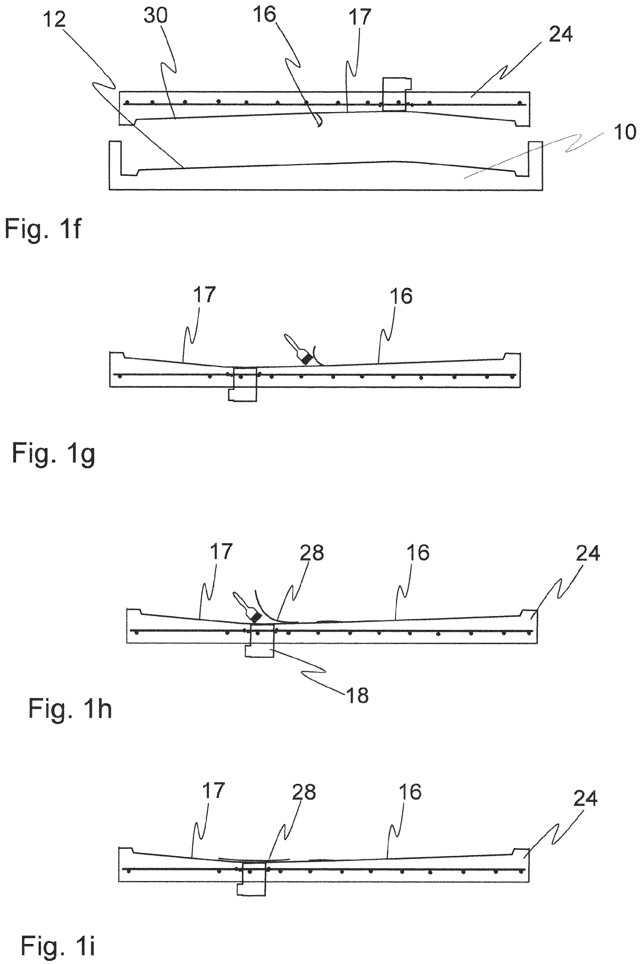

Figs. 1 a to 1 i show by way of example the method according to the invention as a series of images.

Figs. 1a to 1i show by way of example, by means of a series of images, the steps of the method of manufacturing a waterproof slab element according to the invention. The slab element is manufactured at a prefabrication plant by pouring fresh concrete mix into a floor slab casting mold 10. The casting mold has a substantially rectangular mold surface 12 encircled by an edge 14 so that the mold surface and the edge together form a trough-like part. When pouring concrete, the casting mold is in the position shown in Fig. 1a, whereby the mold surface forms the bottom of the mold. The mold surface is shaped in such a way that it is in the form of a mirror image of the top surface of the slab element being cast. The slab elements produced by the method are floor slabs for wet rooms, such as bathrooms, provided with a floor drain and having a top surface which is shaped so as to slope towards the floor drain. Thus, the mold surface is not in the same plane throughout.

In Fig. 1a, the casting mold is shown in cross-section. The casting mold may be made of metal, plywood, wooden material or any other suitable material. The casting mold as such is known in the art, so it will not be described in more detail here.

In the method, a first piece of waterproofing membrane 16 is first applied to the mold surface 12 of the casting mold 10 so as to cover a part of the mold surface (Fig. 1b). A second piece of waterproofing membrane 17 is then applied to the mold surface 12 so that the edge part of the second piece of waterproofing membrane is placed on top of the edge part of the first piece of waterproofing membrane, i.e. the edge parts of the pieces of waterproofing overlap (Fig. 1c). The width of the overlapping portions of the edge parts can be 20-50 cm. The overlapping edge parts of the pieces of waterproofing membrane are not attached to each other. The tolerance provided by the overlapping edge parts of the pieces of waterproofing membrane allows the surfaces of the pieces of waterproofing membrane facing the mold surface to settle tightly against the mold surface, even if the mold surface is not in the same plane over its entire area. If desired, the pieces of waterproofing membrane can be attached to the mold surface with double-sided tape to keep them in place during subsequent pouring of the concrete. The waterproofing membrane comprises a water-impermeable thin flexible fabric-like material approved for the waterproofing of building components.

After the installation of the pieces of waterproofing membrane, the parts and equipment meant to be part of the slab element, such as the floor drain 18 and the reinforcing mesh 20, are attached to the mold (Fig. 1d). A floor drain is installed in the casting mold according to the design so that its mouth is placed tightly against the waterproofing membrane. After that, fresh concrete mix 22 made at a concrete-making plant is poured into the casting mold so that the upper surface of the concrete mix layer is level with the top edge of the mold edges (Fig. 1e). The concrete mix contains aggregate and a cementitious binder. Typically, the aggregate comprises natural rocky materials. The concrete mix is dispensed into the casting mold starting with the second piece of waterproofing membrane so that the concrete mix flows from the second piece of waterproofing membrane, over the joint of the pieces of waterproofing membrane onto the first piece of waterproofing membrane. In this method of pouring the concrete, the concrete mix cannot penetrate between the overlapping portions of the first and second pieces of waterproofing membrane. The overlapping edge parts of the pieces of waterproofing membrane detached in the casting mold or taped to the mold surface of the casting mold can, if necessary, slide relative to each other in the direction of the mold surface when the concrete mix fills the casting mold. The pieces of waterproofing membrane are thus pressed firmly against the mold surface of the casting mold over their entire area, and the pieces of waterproofing membrane are not subjected to tensile strain that might cause tearing during the pouring of concrete. The concrete mix layer is compacted by vibration and its top surface is leveled and rubbed straight. The concrete mix is allowed to cure in the casting mold so that it becomes a slab element 24 (Fig. 1e).

When the concrete has become sufficiently hard in the casting mold 10, the slab element 24 is removed from the casting mold (Fig. 1f). The surface of the slab element facing the mold surface 12, onto which the surface shape of the mold surface is "copied", forms the top surface 30 of the slab element. The portions of the first and second pieces of waterproofing membrane which came into direct contact with the cast concrete mix have adhered to the top surface of the slab element by means of the cementitious binder in the concrete. The edge portion of the first piece of waterproofing membrane 16, which overlapped with the edge portion of the second piece of waterproofing membrane 17 in the casting mold, is at this stage detached.

The detached edge portion of the first piece of waterproofing membrane 16 is glued onto the edge part of the second piece of waterproofing membrane 17 so that the pieces overlap (Fig. 1g). The adhesive used is a brush-on liquid waterproofing agent, which forms a waterproof membrane when it hardens. The liquid waterproofing agent is applied with a brush to the overlapping portions of the waterproofing fabrics and the overlapping portions are pressed tightly against each other. Another layer of waterproofing is applied with a brush over the visible seam. As the waterproofing hardens, it firmly adheres to both pieces of waterproofing membrane and forms a waterproof joint at the seam.

A drain flange 28 is attached on top of the waterproofing membrane at the floor drain 18 on the top surface of the slab element 24 (Fig. 1h). The drain flange is a piece of waterproof membrane that strengthens the waterproofing of the floor slab around the floor drain. The drain flange may be of the same material as the pieces of waterproofing membrane. The drain flange is attached to the waterproofing fabric with a brush-on liquid waterproofing agent. After attaching the drain flange, the waterproofing of the slab element is largely complete (Figure 1i).

In principle, the edges of the pieces of waterproofing membrane can be joined and the drain flange attached as soon as the slab element is removed from the casting mold. Alternatively, the slab element removed from the mold can be transferred to interim storage and the edge parts of the pieces of waterproofing membrane and the drain flange can be attached later at a suitable time. When the liquid waterproofing agent used to attach the drain flange has hardened sufficiently, an opening smaller than the mouth of the floor drain is made in the drain flange and the piece of waterproofing membrane below it at the position of the floor drain 18. A clamping ring is pushed into this opening, which presses the edges of the drain flange and the piece of waterproofing membrane firmly against the inner wall of the floor drain.

In the method, the waterproofing agent is used to attach a piece of waterproofing membrane to another piece of waterproofing membrane or a drain flange, and not to the concrete surface of the slab element, so it is not necessary to wait for the slab element to dry to 90% moisture before attaching the waterproofing membranes and drain flange. The liquid waterproofing agent hardens to its nominal strength typically within twenty-four hours, so the slab element can be transferred to the next work step the day after removal from the mold. The next work step may be to transfer the slab element to a construction site or interim storage, to apply a floor covering or to build the modular unit walls on the slab element.

Some preferred embodiments of the method and slab element according to the invention have been described above. The invention is not limited to the solutions described above, but the inventive idea can be applied in various ways within the scope set by the claims.

### List of reference numbers:

casting mold 10
mold surface 12
edge 14
first piece of waterproofing membrane 16
second piece of waterproofing membrane 17
floor drain 18
reinforcing mesh 20
concrete mix 22
slab element 24
drain flange 28
top surface 30

## Claims

1. A method of making a waterproof slab element (24), which method comprises preparing a casting mold (10) for casting a slab element, wherein the casting mold (10) has a mold surface (12) forming the shape of the top surface (30) of the slab element (24), installing a water-impermeable first piece of waterproofing membrane (16) and at least one water-impermeable second piece of waterproofing membrane (17) on the mold surface (12) so that the second piece of waterproofing membrane (17) partially overlaps the first piece of waterproofing membrane, preparing a concrete mix (22) comprised of aggregate and a cementitious binder, pouring the prepared concrete mix (22) into the casting mold (10), allowing the concrete mix (22) to harden in the casting mold (10) so as to form a slab element (24), and removing the slab element (24) from the casting mold (10), **characterized in that** a part of the second piece of waterproofing membrane (17) is placed on top of the first piece of waterproofing detached from the first piece of waterproofing membrane (16).

2. The method of claim 1, **characterized in that** the concrete mix (22) is poured into the casting mold (10) so that the concrete mix (22) flows from the top of the second piece of waterproofing membrane (17) onto the first piece of waterproofing membrane (16).

3. The method of claim 1 or 2, **characterized in that** the pieces of waterproofing membrane (16, 17) are attached to the mold surface (12) with sticky tape or glue.

4. The method of any of claims 1-3, **characterized in that** a floor drain (18) is installed on the piece(s) of waterproofing membrane (16, 17) before pouring the concrete mix (22) into the casting mold (10) so that the mouth of the floor drain (18) is placed tightly against the surface of the piece of waterproofing membrane (16, 17).

5. The method of any of claims 1-4, **characterized in that** reinforcement (20), sewer pipes and/or possible wiring are installed on the piece(s) of waterproofing membrane (16, 17) before pouring the concrete mix (22) into the casting mold (10).

6. The method of any of claims 1-5, **characterized in that** the method comprises using a casting mold (10) with the edges of the mold surface (12) being in a different plane than the central part of the mold surface.

7. The method of any of claims 1-5, **characterized in that**, after removal from the casting mold (10), the overlapping portions of the pieces of waterproofing (16, 17) adhering to the top surface of the slab element (24) are glued together with a curable liquid containing an adhesive.

8. The method of any of claims 1-6, **characterized in that** the overlapping portions of the pieces of waterproofing (16, 17) are glued together with a liquid waterproofing agent.

9. The method of any of claims 4-6, **characterized in that**, after removal from the casting mold (10), a membrane-like drain flange (28) is attached on the piece of waterproofing (16, 17) adhering to the top surface of the slab element (24), at the position of the floor drain (18).

10. The method of claim 9, **characterized in that** the drain flange is attached to the piece of waterproofing with a curable liquid containing an adhesive, preferably a liquid waterproofing agent.

11. A waterproof slab element (24), which is formed of a hardened concrete mix containing aggregate and a cementitious binder, the slab element (24) having a top surface (30), which top surface (30) has a water-impermeable first piece of waterproofing membrane (16) and at least one water-impermeable second piece of waterproofing membrane (17) so that the second piece of waterproofing membrane (17) partially overlaps the first piece of waterproofing (16), with the first piece of waterproofing membrane (16) and the at least one second piece of waterproofing membrane (17) being attached to the top surface (30) of the floor slab by the cementitious binder contained in the hardened concrete mix in the slab element (24), **characterized in that** the first piece of waterproofing membrane (16) and the second piece of waterproofing membrane (17) are attached to each other at their overlapping surfaces by a curable liquid containing an adhesive.

12. The slab element of claim 11, **characterized in that** the first piece of waterproofing membrane (16) and the second piece of waterproofing membrane (17) are attached to each other at their overlapping surfaces by a liquid waterproofing agent.

13. The slab element of claim 11 or 12, **characterized in that** the pieces of waterproofing membrane (16, 17) are of a non-weldable material.
